# FASCICULE DE BREVET EUROPEEN

(11) **EP 3 125 403 B1**
(45) Date de publication et mention de la délivrance du brevet: **27.04.2022**
(21) Numéro de dépôt: 16181151.8
(22) Date de dépôt: 26.07.2016
(51) Int. Cl.: H02J 13/00

(54) **SYSTÈME DE SURVEILLANCE D'UN POSTE DE TRANSFORMATION**
ÜBERWACHUNGSSYSTEM EINER UMWANDLUNGSSTATION
SYSTEM FOR MONITORING A TRANSFORMER SUBSTATION

(30) Priorité: 27.07.2015 FR 1557168
(43) Date de publication de la demande: 01.02.2017
(73) Titulaire: Schneider Electric Industries SAS, 92500 Rueil-Malmaison (FR)
(72) Inventeur: CRIGNOLA, Damien, 38050 Grenoble Cedex 09 (FR); DESCHAMPS, Philippe, 38050 Grenoble Cedex 09 (FR)
(74) Mandataire: Lavoix

(56) Documents cités:
- WO-A1-95/19059
- WO-A1-2014/110708
- WO-A1-2014/161005
- US-B1- 6 507 184

## Description

La présente invention concerne un réseau de distribution d'électricité comprenant un système de surveillance d'un poste de transformation. L'invention concerne également un procédé de surveillance d'un poste de transformation.

L'invention se situe dans le domaine des réseaux de transport et de distribution d'électricité. De tels réseaux comprennent typiquement un noeud central et des conducteurs électriques. Un certain nombre d'installations électriques sont rattachées par les conducteurs électriques au noeud central.

Le noeud central est, par exemple, un poste de transformation moyenne tension/basse tension (dit poste MT/BT). Un tel poste est situé à l'interface entre un réseau de distribution à moyenne tension et le réseau de distribution à basse tension auxquels les installations électriques sont raccordées.

Les installations électriques sont, par exemple, des installations domestiques ou industrielles. Chaque installation comporte en général plusieurs dispositifs électriques. De tels dispositifs électriques comprennent des dispositifs consommateurs d'électricité et/ou des dispositifs producteurs d'électricité.

Un tel réseau de transport et de distribution est soumis à des fluctuations importantes de sa charge électrique. De telles fluctuations s'expliquent par la variation de la consommation locale, mais également par la variation de la production locale d'électricité. Ce phénomène est accentué par l'emploi de dispositifs de production d'électricité à partir d'énergies renouvelables, et principalement de la production photovoltaïque d'électricité. En effet, un grand nombre de dispositifs de production de faible puissance sont installés chez des particuliers ou des entreprises. L'ajout de tels dispositifs de production à l'intérieur du réseau basse tension rend donc le comportement du réseau difficile à évaluer et à prévoir. En particulier, la valeur de la tension en chaque point du réseau est parfois sensiblement différente de la valeur qui a été calculée lors de la conception du réseau.

La gestion des charges électriques du réseau se fait, par exemple, par l'utilisation de charges pilotables, ou d'équipements de stockage.

II est donc souhaitable de bien connaître la composition et le comportement du réseau électrique. Une telle connaissance permet d'évaluer les variations attendues de la charge du réseau, et donc de répartir et de dimensionner les éléments du réseau.

Les systèmes connus pour connaître la composition et le comportement du réseau électrique requièrent usuellement une architecture de communication complexe afin d'arriver à un niveau de fiabilité suffisant. La mise en place d'un tel système de surveillance est donc difficile.

II existe donc un besoin pour un réseau comprenant un système de surveillance d'un poste de transformation qui soit plus aisé à installer.

A cet effet, il est proposé un système de surveillance d'un réseau de distribution d'électricité du type précité selon la revendication 1.

Selon un mode de réalisation particulier, le réseau comprend une ou plusieurs des caractéristiques des revendications 2 à 9, prises isolément ou suivant toutes les combinaisons techniquement possibles.

II est également proposé un réseau de distribution d'électricité comprenant :
- au moins un conducteur électrique d'entrée,
- au moins un conducteur électrique de sortie,
- au moins un poste de transformation du réseau de type MT/BT, le poste de transformation comportant un conducteur électrique de liaison, le poste de transformation étant propre à recevoir du conducteur électrique d'entrée un premier courant électrique présentant une première tension et à délivrer, à travers le conducteur électrique de liaison, au conducteur électrique de sortie un deuxième courant électrique présentant une deuxième tension, et
- au moins un système de surveillance tel que décrit ci-dessus.
   a) II est également proposé un procédé de surveillance d'un réseau de distribution d'électricité selon la revendication 11.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un réseau de distribution d'électricité comprenant un poste de transformation et un système de surveillance du réseau de distribution,
- la figure 2 est un chronogramme d'un premier exemple de procédé de surveillance du réseau de distribution de la figure 1,
- la figure 3 est un chronogramme d'un deuxième exemple de procédé de surveillance du réseau de distribution de la figure 1, et
- la figure 4 est un chronogramme d'un troisième exemple de procédé de surveillance du réseau de distribution de la figure 1,

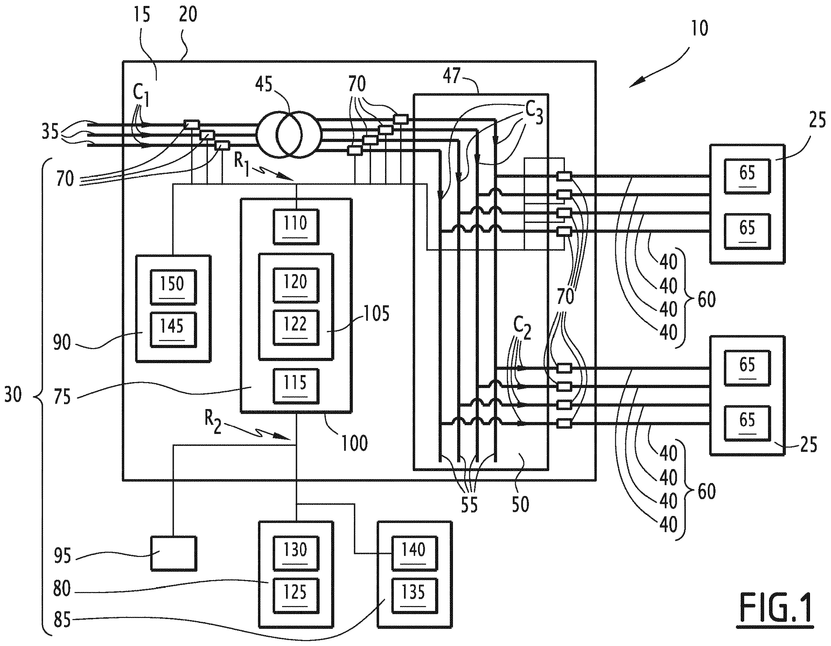

Un réseau 10 de distribution d'électricité est représenté partiellement et schématiquement sur la figure 1.

Selon l'exemple de la figure 1, le réseau de distribution 10 est un réseau alternatif comprenant plusieurs phases, tel qu'un réseau triphasé.

En variante, le réseau de distribution 10 est un réseau monophasé.

Le réseau de distribution 10 comporte au moins un poste de transformation 15, une enceinte 20, une pluralité d'installations électriques 25, un système de surveillance 30 du réseau de distribution 10, plusieurs conducteurs électriques d'entrée 35 et plusieurs conducteurs électriques de sortie 40.

Le poste de transformation 15 est propre à recevoir d'un réseau de distribution moyenne tension (non représenté) un premier courant électrique C1 à travers les conducteurs d'entrées 35.

Le premier courant C1 présente une première tension U1 et une première intensité I1.

Le poste de transformation 15 est également propre à alimenter chaque installation 25 avec un deuxième courant électrique C2 à travers les conducteurs de sortie 40.

Le deuxième courant C2 présente une deuxième tension U2 et une deuxième intensité I2.

Le poste de transformation 15 est un poste de transformation moyenne tension/basse tension (MT/BT). Cela signifie que, d'une part, la première tension U1 est comprise entre 1 kiloVolt (kV) et 50 kV, et que, d'autre part, la deuxième tension U2 est comprise entre 50 V et 1 kV.

Le poste de transformation 15 comprend un transformateur 45, une armoire électrique 47 comprenant un tableau de répartition 50, et au moins un conducteur de liaison 55.

Le transformateur 45 est connecté électriquement par les d'entrée 35 au réseau moyenne tension de distribution, et par au moins un conducteur de liaison 55 au tableau de répartition 50.

Sur la figure 1, le transformateur 45 est connecté au réseau moyenne tension par trois conducteurs d'entrée 35 correspondant chacun à une phase respective du réseau moyenne tension.

Le transformateur 45 est connecté au tableau 50 par quatre conducteurs de liaison 55 correspondant chacun à une phase respective du réseau basse tension et au neutre.

Le transformateur 45 est propre à convertir le premier courant électrique C1 en un troisième courant C3 présentant la deuxième tension U2.

L'armoire électrique 47 délimite un volume intérieur à l'armoire 47. Le volume intérieur à l'armoire 47 sera noté Va dans la suite de cette description.

L'armoire électrique 47 est configurée pour empêcher la circulation d'un courant électrique depuis le tableau 50 jusqu'à l'extérieur de l'armoire 47, et vice-versa, à l'exception des deuxièmes courants C2 et des troisièmes courants C3.

Le tableau de répartition 50 est reçu dans le volume intérieur Va de l'armoire. Cela signifie que les points de connexion des deuxièmes conducteurs 40 aux conducteurs de liaison 55 sont compris dans le volume intérieur de l'armoire Va.

Le tableau de répartition 50 est propre à alimenter chaque conducteur de sortie 40 avec le deuxième courant électrique C2. De préférence, les conducteurs de sortie 40 sont répartis en une pluralité de départs triphasés 60 alimentant chacun une installation électrique 25.

L'enceinte 20 délimite un volume intérieur Vi de l'enceinte. Le poste de transformation 15 est compris dans le volume intérieur de l'enceinte Vi.

L'enceinte 20 est propre à isoler le volume intérieur de l'enceinte Vi de l'extérieur de l'enceinte 20. Cela signifie que l'enceinte 20 est propre à empêcher à une personne non-autorisée d'accéder au poste de transformation. Cela signifie également que l'enceinte 20 est configurée pour empêcher la circulation d'un courant électrique depuis le poste de transformation 15 jusqu'à l'extérieur de l'enceinte 20, et vice-versa, à l'exception des premiers courants C1 et des deuxièmes courants C2. Enfin, cela signifie que l'enceinte 20 est propre à protéger le poste de transformation 15 contre des perturbations climatiques telles que le vent ou la pluie.

Par exemple, l'enceinte 20 comporte quatre murs de béton et un toit.

L'enceinte 20 est reliée électriquement à la terre.

Chaque installation électrique 25 comprend un ensemble d'appareils 65.

L'installation électrique 25 est, par exemple, un réseau domestique de distribution d'électricité.

Chaque appareil 65 est un appareil consommateur ou producteur d'électricité. Par exemple, l'appareil 65 est un dispositif de production photovoltaïque d'électricité, un dispositif d'éclairage, ou encore un dispositif de chauffage.

Le système de surveillance 30 est propre à transmettre, à un utilisateur U, des informations sur le fonctionnement du poste de transformation 15.

Le système de surveillance 30 comprend au moins un capteur 70, un appareil de surveillance 75, un dispositif de centralisation 80, un premier terminal 85, un deuxième terminal 90, et un dispositif de stockage 95. De préférence, le système de surveillance 30 comprend une pluralité de capteurs 70.

L'appareil de surveillance 75, les capteurs 70 et le deuxième terminal 90 appartiennent à un premier réseau local R1 de communication.

Le premier réseau local R1 est un réseau informatique tel que les éléments qui appartiennent au réseau local s'envoient des trames au niveau de la couche de liaison sans utiliser d'accès à internet.

Le premier réseau local R1 est, par exemple, un réseau LAN (*de l'anglais local area network*), qui signifie réseau local.

L'appareil de surveillance 75, le dispositif de centralisation 80, le premier terminal 85 et le dispositif de stockage 95 appartiennent à un réseau global R2.

Le réseau global de communication R2 est le réseau Internet. Le réseau global R2 diffère du premier réseau local R1, dans le sens où le réseau global R2 couvre une zone géographique supérieure au premier réseau local R1.

Le réseau global R2 est, par exemple, un réseau WAN (*de l'anglais wide area network*), qui signifie réseau étendu.

De préférence, le réseau global R2 est un réseau de téléphonie mobile. Cela signifie que le réseau global R2 est configuré pour permettre l'échange de données de téléphonie par ondes électromagnétiques radiofréquences.

Les ondes électromagnétiques radiofréquences OEM sont les ondes électromagnétiques présentant une fréquence comprise entre 3 KiloHertz (KHz) et 3 GigaHertz (GHz).

Par exemple, le réseau global R2 est un réseau de téléphonie mobile conforme au standard GSM établi par l'European Telecommunications Standards Institute.

En variante, le réseau global R2 est un réseau filaire.

Chaque capteur 70 est associé à un conducteur électrique d'entrée 35, de sortie 40 ou de liaison 55 du poste de transformation 15.

Le capteur 70 est propre à mesurer une valeur V représentative d'un courant électrique C1, C2, C3 circulant dans le conducteur 35, 40, 55 associé.

Par exemple, le capteur 70 est un capteur de courant à tore ouvrant propre à mesurer une intensité I1, I2, I3 du courant C1, C2, C3 circulant dans le conducteur 35, 40, 55 associé.

En variante, le capteur 70 est un capteur de tension propre à mesurer une tension U1, U2, U3 du courant C1, C2, C3 circulant dans le conducteur 35, 40, 55 associé.

En variante, le capteur 70 est un capteur de température, un capteur d'ensoleillement, ou encore un capteur d'humidité.

Dans une autre variante, le capteur 70 est installé à l'extérieur de l'enveloppe 20 mais appartient au premier réseau local R1.

Chaque capteur 70 est configuré pour délivrer à l'appareil de surveillance 75 les valeurs V mesurées.

Par exemple, le capteur 70 est propre à transmettre les valeurs V mesurées à l'appareil de surveillance 70 par communication radiofréquence.

En variante, le capteur 70 est propre à communiquer avec l'appareil de surveillance 75 par liaison filaire.

L'appareil de surveillance 75 est propre à générer, à partir des valeurs V mesurées, un rapport R du fonctionnement du poste de transformation 15.

II est entendu par le terme « rapport » un ensemble d'informations propres à être affichées par un terminal 85,90 à destination de l'utilisateur U.

L'appareil de surveillance 75 comprend un corps 100, un calculateur 105, un produit programme d'ordinateur Pr, un module d'émission/réception 110 et un premier module de communication 115.

L'appareil de surveillance 75 est compris dans le volume intérieur Vi de l'enceinte 20.

Par exemple, l'appareil de surveillance 75 est compris dans l'armoire 47.

Le corps 100 est propre à isoler le calculateur 105, le premier module d'émission/réception 110 et le premier module de communication 115 de l'extérieur de l'appareil de surveillance 75.

De préférence, le corps 100 est configuré pour permettre à l'utilisateur U de transporter l'appareil de surveillance 75.

Le calculateur 105 est propre à manipuler et/ou transformer des données représentées comme des quantités électroniques ou physiques dans des registres du calculateur 105 et/ou dans des mémoires en d'autres données similaires correspondant à des données physiques dans des mémoires, des registres ou d'autres types de dispositifs d'affichage, de transmission ou de mémorisation.

Le calculateur 105 est, en outre, propre à échanger des données avec le premier module d'émission/réception 110 et avec le premier module de communication 115.

Le calculateur 105 comporte une première mémoire 120 et une horloge 122.

La première mémoire 120 est propre à mémoriser un premier identifiant I1 de l'appareil de surveillance 75.

Le produit programme d'ordinateur Pr comprend des instructions de programme.

Le programme d'ordinateur Pr est chargeable sur le calculateur 105 et est adapté pour entraîner la mise en œuvre d'un procédé de calcul de données d'exploitation De lorsque le programme d'ordinateur Pr est mis en œuvre sur le calculateur 105.

Le premier module d'émission/réception 110 est configuré pour échanger des données avec chaque capteur 70 et avec le deuxième terminal 90 à travers le réseau local R1.

Le premier module d'émission/réception 110 est un module de communication radiofréquence. Cela signifie que le premier module d'émission/réception 110 est propre à émettre ou à recevoir des données transmises via un signal comportant au moins une onde électromagnétique radiofréquence OEM.

De préférence, le premier module d'émission/réception 110 est propre à émettre et à recevoir des données transmises via un signal comportant au moins une onde électromagnétique radiofréquence OEM.

Le premier module d'émission/réception 110 est, par exemple, propre à émettre ou à recevoir une onde électromagnétique OEM présentant une fréquence supérieure ou égale à 2400 MégaHertz (MHz) et inférieure ou égale à 2483,5 MHz.

De préférence, le premier module d'émission/réception 110 est propre à émettre et à recevoir une onde électromagnétique OEM présentant une fréquence supérieure ou égale à 2400 MégaHertz (MHz) et inférieure ou égale à 2483,5 MHz.

Avantageusement, le premier module d'émission/réception 110 utilise un protocole de communication Bluetooth. Bluetooth est un standard de communication permettant l'échange bidirectionnel de données à très courte distance. Les normes définissant les protocoles Bluetooth sont définies par le « Bluetooth Spécial Interest Group ».

En variante, le premier module d'émission/réception 110 utilise un protocole de communication ZigBee conforme à la norme IEEE 802.15.4.

En complément facultatif, le premier module d'émission/réception 110 est propre à émettre ou à recevoir une onde électromagnétique présentant une fréquence supérieure ou égale à 13,553 MHz, et inférieure ou égale à 13,567 MHz.

De préférence, le premier module d'émission/réception 110 est propre à émettre et à recevoir une onde électromagnétique présentant une fréquence supérieure ou égale à 13,553 MHz, et inférieure ou égale à 13,567 MHz.

Avantageusement, le premier module d'émission/réception 110 utilise un protocole de communication en champ proche (de l'Anglais « Near-Field Communication », NFC). La communication en champ proche est une technologie de communication sans-fil à courte portée et haute fréquence, permettant l'échange d'informations entre des périphériques jusqu'à une distance d'environ 10 centimètres (cm). La technologie NFC est une extension de la norme ISO/CEI 14443.

Selon une autre variante, le premier module d'émission/réception 110 est un module de communication filaire utilisant un protocole Ethernet, telle que standardisé dans la norme ISO/IEEE 802/3.

Le premier module de communication 115 est configuré pour échanger des données avec le dispositif de centralisation 80 à travers le réseau global R2.

Avantageusement, le premier module de communication 115 est propre à échanger des données avec le dispositif de centralisation 80 selon un protocole FTP. File Transfer Protocol (« protocole de transfert de fichiers »), ou FTP, est un protocole de communication destiné à l'échange informatique de fichiers sur un réseau TCP/IP. FTP est défini par la note RFC 959 de l' « Internet Engineering Task Force ».

De préférence, le premier module de communication 115 est un module de communication radiofréquence conforme au standard GSM.

En variante, le premier module de communication 115 est un module de communication filaire tel qu'un module Ethernet.

Le dispositif de centralisation 80 comporte une deuxième mémoire 125 et un deuxième module de communication 130.

La deuxième mémoire 125 est propre à échanger des informations avec le deuxième module de communication 130.

Le deuxième module de communication 130 est propre à échanger des données avec le premier module de communication 115 et avec le premier terminal 85 à travers le réseau global R2.

De préférence, le deuxième module de communication 130 est un module de communication radiofréquence conforme au standard GSM.

En variante, le deuxième module de communication 130 est un module de communication filaire tel qu'un module Ethernet.

Le premier terminal 85 comporte une première interface homme-machine 135 et un troisième module de communication 140.

La première interface homme-machine 135 est propre à afficher à destination de l'utilisateur U le rapport R. La première interface homme-machine 135 comprend un écran d'affichage et un clavier.

Le troisième module de communication 140 est propre à échanger des données avec le premier module de communication 115 à travers le réseau global R2.

Par exemple, le troisième module de communication 140 est un module de communication radiofréquence conforme au standard GSM.

En variante, le troisième module de communication 140 est un module de communication filaire tel qu'un module Ethernet.

Le deuxième terminal 90 comporte une deuxième interface homme-machine 145 et un deuxième module d'émission-réception 150.

La deuxième interface homme-machine 145 est propre à permettre à l'utilisateur U d'échanger des informations avec le deuxième terminal 90.

En particulier, la deuxième interface homme-machine 145 est propre à afficher à destination de l'utilisateur U le rapport R.

De préférence, la deuxième interface homme-machine 145 est, en outre, propre à permettre à l'utilisateur U de transmettre au deuxième terminal 90 des instructions de commande de l'appareil de surveillance 75.

La deuxième interface homme-machine 145 comprend un écran d'affichage et un clavier.

Le deuxième module d'émission-réception 150 est propre à échanger des informations avec le premier module d'émission-réception 110.

Par exemple, le deuxième module d'émission-réception 150 est propre à émettre ou à recevoir une onde électromagnétique présentant une fréquence supérieure ou égale à 13,553 MHz, et inférieure ou égale à 13,567 MHz.

De préférence, le deuxième module d'émission-réception 150 est propre à émettre et à recevoir une onde électromagnétique présentant une fréquence supérieure ou égale à 13,553 MHz, et inférieure ou égale à 13,567 MHz.

Avantageusement, deuxième module d'émission-réception 150 utilise un protocole de communication NFC.

En variante, le deuxième module d'émission-réception 150 est un module de communication par liaison filaire.

Le dispositif de stockage 95 est propre à mémoriser des données externes Dex et à transmettre les données externes Dex au premier module de communication 115 à travers le réseau global R2.

Les données externes Dex comprennent, par exemple, des valeurs de la température mesurée à proximité du poste de transformation 15.

En variante, les données externes comprennent des valeurs d'ensoleillement mesurées à proximité du poste de transformation 15.

Le fonctionnement du système de surveillance 30 va maintenant être décrit.

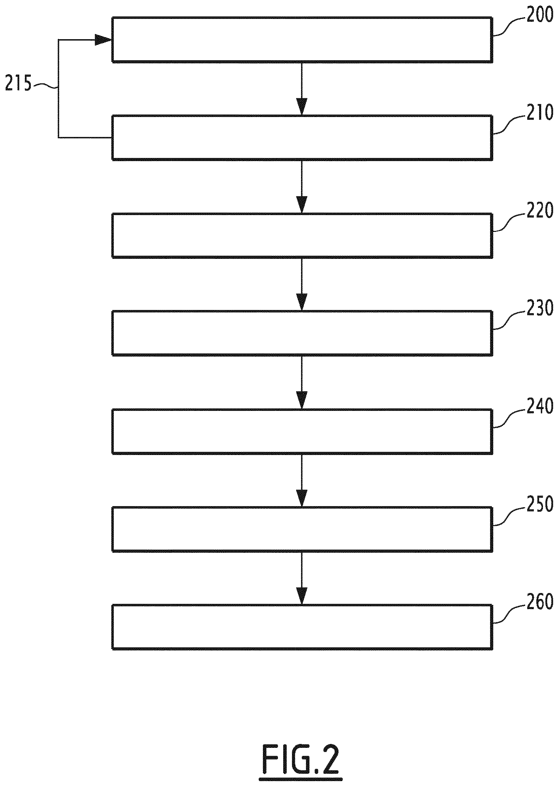

La figure 2 présente un chronogramme d'un procédé de surveillance du réseau de distribution 10.

Le procédé de surveillance comprend une étape 200 de mesure d'une valeur V, une étape 210 de réception de la valeur V, une étape 220 de calcul de données d'exploitation De, une étape 230 de génération d'un rapport R, une étape 240 de transmission du rapport R au dispositif de centralisation, une étape 250 de communication du rapport R au premier terminal et une étape 260 d'affichage du rapport R.

Lors de l'étape 200 de mesure, un capteur 70 mesure une valeur V représentative du courant C1, C2, C3 circulant dans le conducteur 35, 40, 55 auquel le capteur 70 est associé.

La valeur V est par exemple une valeur V de l'intensité I1, I2, I3 du courant C1, C2, C3. En variante, la valeur V est une valeur de la tension U1, U2, U3 du courant C1, C2, C3.

Lors de l'étape 210 de réception, la valeur V est transmise par le capteur 70 à l'appareil de surveillance 75. Cela signifie que le capteur 70 émet, à destination du premier module d'émission/réception 110 un premier message M1 contenant la valeur V.

Le premier message M1 comprend, en outre, un deuxième identifiant I2 du capteur 70.

Par exemple, le premier message M1 comprend un champ d'en-tête, également appelé préambule, et un champ de données. Le préambule comprend le deuxième identifiant I2 et le champ de données comprend la valeur V mesurée..

La valeur V est mémorisée dans la première mémoire 120 et historisée. Cela signifie que le calculateur 105 associe à la valeur V, dans la première mémoire 120, une date D, fournie par l'horloge 122, à laquelle la valeur V a été reçue par le calculateur 105.

L'étape de réception 210 est suivie d'un retour 215 à l'étape de mesure 200.

Cela signifie que les étapes 200 de mesure et 210 de réception sont réitérées dans cet ordre afin d'aboutir à la mémorisation, dans la première mémoire 120, d'un premier ensemble E1 de valeurs V.

Les étapes 200 de mesure et 210 de réception sont mises en œuvre pour le capteur 70, avec une fréquence prédéfinie, pendant une durée temporelle prédéfinie, par exemple égale à dix minutes. Les étapes 200 de mesure et 210 de réception sont donc mises en œuvre pour le capteur 70 un premier nombre d1 prédéterminé de fois.

Dans le cas où le réseau local R1 comporte plusieurs capteurs 70, les étapes 200 de mesure et 210 de réception sont mises en œuvre le premier nombre prédéterminé d1 de fois pour chaque capteur 70.

Une pluralité de premiers ensembles E1 correspondant chacun à un capteur 70 respectif sont donc générés lors des étapes 200 de mesure et 210 de réception.

Le premier nombre prédéterminé d1 est par exemple supérieur ou égal à 10, de préférence supérieur ou égal à 100, préférence supérieur ou égal à 1000, préférence supérieur ou égal à 10000.

Par exemple, les étapes 200 de mesure et 210 de réception sont mises en œuvre selon un mécanisme de jeton distribué. Cela signifie que, lors du retour 215, l'appareil de surveillance 75 émet un deuxième message M2 contenant le deuxième identifiant I2 d'un capteur 70 pour lequel les étapes 200 de mesure et 210 de réception sont mises en œuvre.

Si les étapes 200 de mesure et 210 de réception n'ont pas été mises en œuvre pour tous les capteurs 70, le deuxième message M2 contient le deuxième identifiant I2 d'un capteur pour lequel les étapes 200 de mesure et 210 de réception n'ont pas encore été mises en œuvre.

Sinon, le deuxième message M2 contient le deuxième identifiant I2 du capteur 70 pour lequel les étapes 200 de mesure et 210 de réception ont été mises en œuvre pour la dernière fois il y a le plus longtemps.

De préférence, les étapes 200 de mesure et 210 de réception sont mises en œuvre pour un même capteur 70 avec une première période temporelle P1 prédéfinie.

Par exemple, la première période P1 est égale à une minute

Lorsque les étapes 200 de mesure et 210 de réception ont été mises en œuvre successivement le premier nombre prédéterminé d1 de fois pour chaque capteur 70, l'étape 220 de calcul est mise en œuvre par le calculateur 105.

Lors de l'étape 220 de calcul, un deuxième ensemble E2 de données d'exploitation De est généré, à partir du premier ensemble E1, par le calculateur 105.

Les données d'exploitation De sont des données calculées, par le calculateur 105, à partir au moins des valeurs V mesurées.

Lors de l'étape 220 de calcul, le dispositif de stockage 95 transmet, en outre, les données externes Dex au premier module de communication 115 à travers le réseau global R2.

Avantageusement, les données d'exploitation De sont calculées à partir des valeurs V mesurées et des données externes Dex reçues au cours de l'étape 220 de calcul.

Par exemple, le calculateur 105 calcule un troisième ensemble E3 de données d'exploitation De. Le troisième ensemble E3 comprend le premier nombre prédéterminé d1 de données d'exploitation.

Par exemple, les données d'exploitation comprennent des valeurs d'une puissance P du courant C1, C2, C3 circulant dans le conducteur 35, 40, 55 associé au capteur 70. A chaque valeur V mesurée est associée une valeur de puissance P calculée par le calculateur 105.

La puissance P est choisie parmi une puissance active et une puissance réactive.

En variante, lorsque les valeurs mesurées sont des valeurs de la première intensité I1 et des valeurs de la deuxième tension U2, les données d'exploitation De comprennent des valeurs de la première tension U1 que le calculateur 105 est propre à calculer.

Selon une autre variante, le produit programme d'ordinateur Pr est propre à mettre en œuvre un procédé de détection d'au moins un appareil 65 de production photovoltaïque d'électricité dans une installation 25, et les données d'exploitation De comprennent une valeur d'une puissance crête Pc calculée par le calculateur 105 pour l'appareil 65 détecté. Selon cette troisième variante, les données d'exploitation De sont calculées à partir des valeurs mesurées V et des données externes Dex.

Les données d'exploitation De calculées sont mémorisées dans la première mémoire 120.

Pour chaque donnée d'exploitation De est également mémorisée la date à laquelle la donnée d'exploitation De a été calculée par le calculateur 105.

Lors de l'étape 230 de génération, un rapport R est généré par le calculateur 105 à partir des données d'exploitation De mémorisées dans la première mémoire 120.

Le rapport R est un ensemble d'informations compréhensibles par l'utilisateur U et comprenant des données d'affichages Da propres à être affichées par le premier terminal 80.

Le rapport R comprend, en outre, une date de génération du rapport R.

De préférence, le rapport R prend la forme d'un fichier de données propre à permettre au premier terminal 85 d'afficher les données d'affichage Da sous la forme d'une représentation graphique sur la première interface homme-machine 135, telle qu'une courbe.

Par exemple, le rapport R comporte un fichier au format CSV. Le format CSV est un format informatique ouvert représentant des données tabulaires sous forme de valeurs séparées par des virgules.

Le rapport R est mémorisé dans la première mémoire 120.

De préférence, les données d'affichages Da sont différentes des données d'exploitation De.

Les données d'affichage Da comprennent avantageusement une première liste de valeurs d'abscisse Va et une deuxième liste de valeurs d'ordonnées Vo.

Par exemple, les valeurs d'ordonnées Vo comprennent une donnée d'exploitation De et les valeurs d'abscisse Va comprennent la date associée dans la première mémoire 120.

Les données d'affichage Da comprennent, en outre, un descriptif Desc des données d'exploitation De à partir desquelles les données d'affichage Da ont été générées. II est entendu par « descriptif » une définition des données d'exploitation De propre à permettre à l'utilisateur U de comprendre la nature des données d'exploitation De et leur origine. Par exemple, lorsque les données d'exploitation De sont des valeurs de la première tension U1, le descriptif Desc comprend la phrase «Valeurs de tension d'entrée du poste A entre B et C », où A est le premier identifiant I1, B et C sont les dates respective de la première donnée d'exploitation De et de la dernière donnée d'exploitation De à partir desquelles le rapport R a été généré.

Les données d'affichages Da comprennent une sélection de données d'exploitation De. Cela signifie que, lors de l'étape de génération 230, le deuxième ensemble E2 est divisé en deux premiers sous-ensembles e1, et que les données d'affichage Da comprennent un seul des deux premiers sous-ensembles e1. Chacun des deux premiers sous-ensembles e1 est non vide.

Par exemple, les données d'affichage Da comprennent un deuxième nombre prédéterminé d2 de données d'exploitation De et la date associée à chaque donnée d'exploitation De sélectionnée.

Le deuxième nombre prédéterminé d2 est choisi pour permettre l'affichage des données d'affichage Da par le premier terminal 85. Le deuxième nombre prédéterminé d2 est compris entre 10 et 100, par exemple égal à 40.

Le deuxième nombre prédéterminé d2 est strictement inférieur au premier nombre prédéterminé d1.

En variante, les données d'affichages Da sont calculées à partir des données d'exploitation De.

Par exemple, lors de l'étape de génération 230, le premier ensemble E1 est partitionné en le deuxième nombre prédéterminé d2 de deuxièmes sous-ensembles e2, et une donnée d'affichage Da est calculée pour chaque deuxième sous-ensemble e2.

Le partitionnement de données (ou data clustering en anglais) est une des méthodes statistiques d'analyse des données. Le partitionnement de données vise à diviser un ensemble de données en différents sous-ensembles homogènes, en ce sens que les données de chaque sous-ensemble partagent des caractéristiques communes, qui correspondent le plus souvent à des critères de proximité entre objets

Par exemple, lorsque les données d'exploitation De comprennent des valeurs de la première tension U1 calculées par le calculateur 105, les données d'exploitation De sont ordonnées par ordre décroissant de la première tension U1 calculée, et chaque deuxième sous-ensemble e2 comporte une pluralité de valeurs de la première tension U1. Chaque deuxième sous-ensemble e2 comprend une pluralité de valeurs successives de la première tension U1. Le critère de répartition des valeurs de la première tension U1 dans les deuxièmes sous-ensembles e2 est alors un nombre d'occurrence de la valeur de la première tension U1.

Les données d'affichage Da comprennent alors, pour chaque deuxième sous-ensemble e2, une moyenne des valeurs et une moyenne des nombres d'occurrence des valeurs de la première tension U1 contenus dans le deuxième sous-ensemble e2.

Les données d'affichage Da sont alors propres à permettre au premier terminal 85 d'afficher une courbe appelée « courbe monotone de la première tension U1 ».

L'étape 230 de génération est mise en œuvre avec une deuxième période temporelle P2 prédéterminée. La deuxième période P2 est, par exemple, égale à 10 minutes.

Lors de l'étape 240 de transmission, le premier module de communication 115 transmet le rapport R, à travers le réseau global R2, au deuxième module de communication 130.

Le premier module de communication 115 transmet le rapport R au deuxième module de communication 130 par communication radiofréquence GSM.

De préférence, le premier module de communication 115 transmet le rapport R au deuxième module de communication 130 selon le protocole FTP.

Le premier module de communication 115 émet tout d'abord un troisième message M3 à destination du deuxième module de communication 130.

Lorsque le deuxième module de communication 130 reçoit le troisième message M3, le deuxième module de communication 130 émet un quatrième message M4 à destination du premier module de communication 115.

Lorsque le quatrième message M4 a été reçu par le premier module de communication 115, un cinquième message M5 contenant le rapport R est émis, par le premier module de communication 115 à destination du deuxième module de communication 130.

De préférence, le cinquième message M5 comprend tous les rapports R générés par l'appareil de surveillance 75 et n'ayant pas encore été transmis au dispositif de centralisation 80.

Le cinquième message M5 comprend, en outre, le premier identifiant I1 de l'appareil de surveillance 75.

Le rapport R est mémorisé dans la deuxième mémoire 125.

L'étape 240 de transmission est mise en œuvre avec la deuxième période temporelle P2.

Si le premier module de communication 115 ne reçoit pas le quatrième message M4, le cinquième message M5 n'est pas émis. Le rapport R est conservé dans la première mémoire 120 pour être transmis lors d'une prochaine réitération de l'étape 240 de transmission.

Lors de l'étape 250 de communication, le rapport R est communiqué, par le dispositif de centralisation 80, au premier terminal 85 à travers le réseau global R2. Cela signifie que le deuxième module de communication émet, à destination du troisième module de communication 140, un sixième message M6 comprenant le rapport R.

Lors de l'étape 260 d'affichage, le rapport R est affiché sur la première interface homme-machine 135 à destination de l'utilisateur U.

Le système de surveillance 30 n'implique pas la communication, par le réseau global de communication R2, d'une grande quantité de données. En effet, seul le rapport R, contenant les données d'affichage Da, est transmis à travers le réseau global R2. Or, les données d'affichages Da ne comprennent pas la totalité des données d'exploitation De calculées, mais uniquement les informations nécessaires à l'affichage des données par le premier terminal 85.

Le système de surveillance 30 permet donc l'utilisation d'un réseau à bas débit, tel qu'un réseau de téléphonie mobile, pour transmettre les données. L'installation du système de surveillance 30 est donc facilitée par rapport aux systèmes de surveillance de l'état de la technique.

En outre, le système de surveillance 30 ne nécessite pas que la liaison de communication entre l'appareil de surveillance 75 et le dispositif de centralisation 80 soit active en permanence ou en temps réel. Si la connexion entre l'appareil de surveillance 75 et dispositif de centralisation 80 est indisponible, le rapport R est stocké dans la première mémoire 120 pour transmission à une date ultérieure. Ainsi, même en cas de perte de communication du réseau global de communication R2, les données sont toujours disponibles localement, par exemple pour analyse par un opérateur.

De plus, le dispositif de centralisation 80 n'a pas à calculer ou à analyser les données d'exploitation DE. Le dispositif de centralisation 80 n'a pour fonction que de mémoriser et de transmettre au premier terminal 85 les rapports R.

Le dispositif de centralisation 80 est donc moins complexe et moins onéreux que les dispositifs de centralisation des systèmes de surveillance de l'état de la technique.

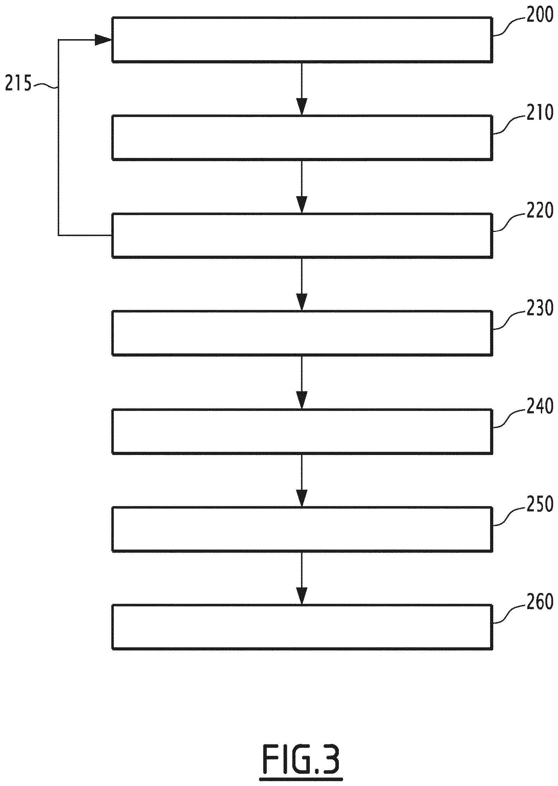

Un chronogramme d'un deuxième exemple de procédé de surveillance du réseau de distribution 10 est représenté sur la figure 3. Les éléments identiques au premier exemple de la figure 2 ne sont pas décrits à nouveau. Seules les différences sont mises en évidence.

L'étape de réception 210 n'est pas suivie du retour 215.

L'étape de calcul 220 est suivie du retour 215 à l'étape de mesure 200.

L'étape de mesure 200, l'étape de réception 210 et l'étape de calcul 220 sont réitérées dans cet ordre avec la première période temporelle P1.

Lors de l'étape 230 de génération, le rapport R est généré à partir des données d'exploitation De calculées depuis la génération du rapport R précédent.

Les avantages du deuxième exemple de procédé sont identiques aux avantages du premier exemple.

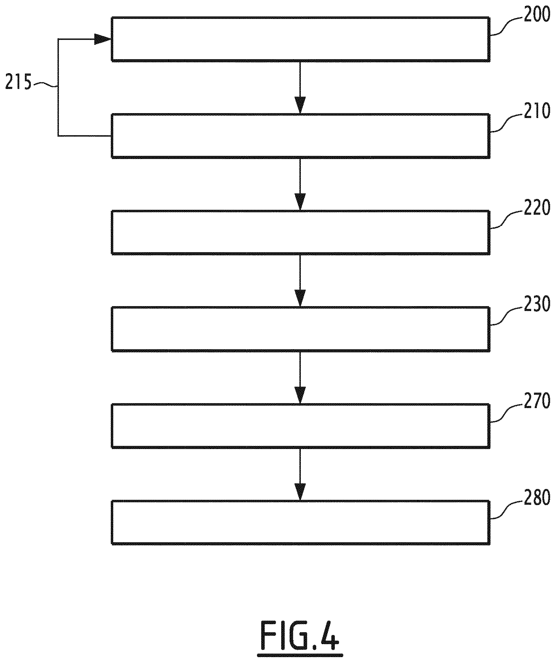

Un chronogramme d'un troisième exemple de procédé de surveillance du réseau de distribution 10 est représenté sur la figure 4. Les éléments identiques au premier exemple de la figure 2 ne sont pas décrits à nouveau. Seules les différences sont mises en évidence.

Le troisième exemple de procédé de surveillance est, par exemple, mis en œuvre lorsque la connexion entre l'appareil de surveillance 75 et dispositif de centralisation 80 est indisponible.

Les étapes 240 de transmission, 250 de communication et 260 d'affichage ne sont pas mises en œuvre.

Le procédé comprend une étape 270 de transfert et une étape 280 de présentation.

Lors de l'étape 270 de transfert, le rapport R est transféré, par l'appareil de surveillance 75, à travers le réseau local R1, au deuxième terminal 90.

Le premier module d'émission/réception 110 émet, à destination du deuxième module d'émission/réception 150, un septième message M7 comprenant le rapport R.

Avantageusement, le septième message M7 est transmis par communication en champ proche NFC.

De préférence, le septième message M7 comprend tous les rapports R générés par l'appareil de surveillance 75 et n'ayant pas encore été transmis au dispositif de centralisation 80.

En variante, le septième message M7 comprend un rapport R choisi par l'utilisateur U du deuxième terminal 90.

Lors de l'étape de présentation 280, le rapport R est affiché, par la deuxième interface homme-machine 145, à destination de l'utilisateur U.

Le système de surveillance 30 permet un accès, par l'utilisateur U, aux rapports R générés même en l'absence de liaison entre l'appareil de surveillance 75 et le dispositif de centralisation 80.

Le système de surveillance 30 est donc plus fiable que les systèmes de surveillance de l'état de la technique.

## Revendications

1. Système (30) de surveillance d'un réseau (10) de distribution d'électricité, le réseau de distribution (10) comprenant :
- au moins un conducteur électrique d'entrée (35),
- au moins un conducteur électrique de sortie (40), et
- au moins un poste de transformation (15) du réseau de type MT/BT, le poste de transformation (15) comportant un conducteur électrique de liaison (55), le poste de transformation (15) étant propre à recevoir du conducteur électrique d'entrée (35) un premier courant électrique (C1) présentant une première tension (U1) et à délivrer, à travers le conducteur électrique de liaison (55), au conducteur électrique de sortie (40) un deuxième courant électrique (C2) présentant une deuxième tension (U2),
le système (30) comprenant :
• au moins un capteur (70) propre à mesurer au moins une valeur (V) représentative d'un courant électrique (C1, C2, C3) circulant dans le conducteur d'entrée (35), le conducteur de sortie (40) ou le conducteur de liaison (55),
• au moins un appareil (75) de surveillance du poste de transformation (15), l'appareil de surveillance (75) comportant un calculateur (105) propre à générer des données d'exploitation (De) à partir de la ou les valeurs (V) mesurées par le ou les capteurs (70),
• un premier terminal d'affichage (85), et
• un dispositif de centralisation (80),
le capteur (70) et l'appareil de surveillance (75) appartenant à un réseau local (R1) de communication respectif, l'appareil de surveillance (75), le dispositif de centralisation (80) et le premier terminal (85) appartenant à un réseau global (R2) de communication et l'appareil de surveillance (75) étant propre à générer, à partir au moins des données d'exploitation (De), un rapport (R) comprenant des données d'affichage (Da) propres à être affichées par le premier terminal (85), l'appareil de surveillance (75) étant, en outre, propre à transmettre le rapport (R) au dispositif de centralisation (80) à travers le réseau global (R2), le dispositif de centralisation (80) étant apte à transmettre le rapport (R) au premier terminal (85) à travers le réseau global (R2).

2. Système de surveillance (30) selon la revendication 1, dans lequel le réseau global (R2) est un réseau de téléphonie mobile.

3. Système de surveillance (30) selon la revendication 1 ou 2, propre à surveiller un réseau (10) comportant, en outre, une enceinte (20) délimitant un volume intérieur à l'enceinte (Vi) et propre à isoler le poste de transformation (15) de l'extérieur de l'enceinte (20),
dans lequel l'appareil de surveillance (75) est compris dans le volume intérieur de l'enceinte (Vi).

4. Système de surveillance (30) selon l'une quelconque des revendications 1 à 3, propre à surveiller un réseau (10) dans lequel le poste de transformation (30) comporte, en outre, une armoire électrique (47) délimitant un volume intérieur à l'armoire (Va), un tableau électrique (50) étant compris dans le volume intérieur de l'armoire (Va),
l'appareil de surveillance (75) étant compris dans le volume intérieur de l'armoire (Va).

5. Système de surveillance (30) selon l'une quelconque des revendications 1 à 4, comprenant un deuxième terminal (90) appartenant au réseau local (R1) de communication, le deuxième terminal (90) étant propre à recevoir le rapport (R) de l'appareil de surveillance (75) à travers le réseau local (R1).

6. Système de surveillance (30) selon l'une quelconque des revendications 1 à 5, dans lequel les données d'exploitation (De) comprennent au moins deux premiers sous-ensembles (e1), chaque premier sous-ensemble (e1) comprenant au moins un élément, et les données d'affichage (Da) comprennent un seul des premiers sous-ensembles (e1).

7. Système de surveillance (30) selon l'une quelconque des revendications 1 à 6, dans lequel dans lequel le calculateur (105) est propre à regrouper les données d'exploitation (De) en une pluralité de deuxièmes sous-ensembles (e2) et à générer les données d'affichage (Da) à partir des deuxièmes sous-ensembles (e2).

8. Système de surveillance (30) selon l'une quelconque des revendications 1 à 7, dans lequel le réseau global (R2) comprend au moins un dispositif de stockage (95) propre à mémoriser des données externes (Dex) et à transmettre les données externes (Dex) à l'appareil de surveillance (75), l'appareil de surveillance (75) étant propre à générer les données d'exploitation (De) à partir au moins des données externes (Dex) et des valeurs (V) mesurées.

9. Système de surveillance (30) selon l'une quelconque des revendications 1 à 8, dans lequel les données d'exploitation (De) comprennent une valeur de la première tension (U1).

10. Réseau (10) de distribution d'électricité comprenant :
- au moins un conducteur électrique d'entrée (35),
- au moins un conducteur électrique de sortie (40),
- au moins un poste de transformation (15) du réseau de type MT/BT, le poste de transformation (15) comportant un conducteur électrique de liaison (55), le poste de transformation (15) étant propre à recevoir du conducteur électrique d'entrée (35) un premier courant électrique (C1) présentant une première tension (U1) et à délivrer, à travers le conducteur électrique de liaison (55), au conducteur électrique de sortie (40) un deuxième courant électrique (C2) présentant une deuxième tension (U2), et
- au moins un système de surveillance (30) selon l'une quelconque des revendications 1 à 9.

11. Procédé de surveillance d'un réseau de distribution d'électricité (10) comprenant :
- au moins un conducteur électrique d'entrée (35),
- au moins un conducteur électrique de sortie (40),
- au moins un poste de transformation (15) du réseau de type MT/BT, le poste de transformation (15) comportant un conducteur électrique de liaison (55), le poste de transformation (15) étant propre à recevoir du conducteur électrique d'entrée (35) un premier courant électrique (C1) présentant une première tension (U1) et à délivrer, à travers le conducteur électrique de liaison (55), au conducteur électrique de sortie (40) un deuxième courant électrique (C2) présentant une deuxième tension (U2), et
- un système (30) de surveillance du réseau de distribution (10), le système (30) comprenant :
• au moins un capteur (70) propre à mesurer une valeur (V) représentative d'un courant électrique (C1, C2, C3) circulant dans le conducteur d'entrée (35), le conducteur de sortie (40) ou le conducteur de liaison (55),
• au moins un appareil de surveillance (75) du poste de transformation (15), l'appareil de surveillance (75) comprenant un calculateur (105),
• un premier terminal d'affichage (85) et
• un dispositif de centralisation (80);
le capteur (70) et l'appareil de surveillance (75) appartenant à un réseau local (R1) de communication respectif, l'appareil de surveillance (75), le dispositif de centralisation (80) et le premier terminal (85) appartenant à un réseau global (R2) de communication, le procédé comportant des étapes de :
a) réception, par l'appareil de surveillance (75), d'au moins une valeur (V) mesurée,
b) calcul, par le calculateur (105), de données d'exploitation (De),
c) génération par le calculateur (105), à partir au moins des données d'exploitation (De), d'un rapport (R) comprenant des données d'affichage (Da) propres à être affichées par le premier terminal (85),
d) transmission, par l'appareil de surveillance (75), du rapport (R) au dispositif de centralisation (80) à travers le réseau global (R2),
e) transmission, par le dispositif de centralisation (80) du rapport (R) au premier terminal (85) à travers le réseau global (R2), et
f) affichage, par le premier terminal (85), du rapport (R).

## Patentansprüche

1. System (30) zur Überwachung eines Netzwerks (10) zur Stromverteilung, das Verteilungsnetzwerk (10) umfassend:
- mindestens einen elektrischen Eingangsleiter (35),
- mindestens einen elektrischen Ausgangsleiter (40) und
- mindestens eine Transformatorstation (15) des Netzwerks vom Typ MT/BT, die Transformatorstation (15) umfassend einen elektrischen Verbindungsleiter (55), wobei die Transformatorstation (15) geeignet ist, um von dem elektrischen Eingangsleiter (35) einen ersten elektrischen Strom (C1) zu empfangen, der eine erste Spannung (U1) aufweist, und um dem elektrischen Ausgangsleiter (40) über den elektrischen Verbindungsleiter (55) einen zweiten elektrischen Strom (C2) zuzuführen, der eine zweite Spannung (U2) aufweist,
das System (30) umfassend:
• mindestens einen Sensor (70), der geeignet ist, um mindestens einen Wert (V) zu messen, der repräsentativ für einen elektrischen Strom (C1, C2, C3) ist, der in dem Eingangsleiter (35), dem Ausgangsleiter (40) oder dem Verbindungsleiter (55) fließt,
• mindestens ein Gerät (75) zur Überwachung der Transformatorstation (15), das Überwachungsgerät (75) umfassend einen Rechner (105), der geeignet ist, um anhand des Werts oder der Werte, der/die von dem oder den Sensoren (70) gemessen werden, Betriebsdaten (De) zu erzeugen,
• ein erstes Anzeigeendgerät (85), und
• eine Zentralisierungsvorrichtung (80),
wobei der Sensor (70) und das Überwachungsgerät (75) zu einem jeweiligen lokalen Kommunikationsnetzwerk (R1) gehören, das Überwachungsgerät (75), die Zentralisierungsvorrichtung (80) und das erste Endgerät (85) zu einem globalen Kommunikationsnetzwerk (R2) gehören und das Überwachungsgerät (75) geeignet ist, um anhand mindestens der Betriebsdaten (De) einen Bericht (R) zu erstellen, der Anzeigedaten (Da) umfasst, die geeignet sind, von dem ersten Endgerät (85) angezeigt zu werden, wobei das Überwachungsgerät (75) ferner geeignet ist, um den Bericht (R) über das globale Netzwerk (R2) an die Zentralisierungsvorrichtung (80) zu übertragen, wobei die Zentralisierungsvorrichtung (80) geeignet ist, um den Bericht (R) über das globale Netzwerk (R2) an das erste Endgerät (85) zu übertragen.

2. Überwachungssystem (30) nach Anspruch 1, wobei das globale Netzwerk (R2) ein Mobiltelefonnetzwerk ist.

3. Überwachungssystem (30) nach Anspruch 1 oder 2, das geeignet ist, um ein Netzwerk (10) zu überwachen, ferner umfassend ein Gehäuse (20), das ein Volumen innerhalb des Gehäuses (Vi) begrenzt und geeignet ist, um die Transformatorstation (15) von der Außenseite des Gehäuses (20) zu isolieren,
wobei das Überwachungsgerät (75) in dem Innenvolumen des Gehäuses (Vi) enthalten ist.

4. Überwachungssystem (30) nach einem der Ansprüche 1 bis 3, das geeignet ist, um ein Netzwerk (10) zu überwachen, bei dem die Transformatorstation (30) ferner einen Schaltschrank (47) umfasst, der ein Innenvolumen des Schranks (Va) begrenzt, wobei eine Schalttafel (50) in dem Innenvolumen des Schranks (Va) enthalten ist,
wobei das Überwachungsgerät (75) in dem Innenvolumen des Schranks (Va) enthalten ist.

5. Überwachungssystem (30) nach einem der Ansprüche 1 bis 4, umfassend ein zweites Endgerät (90), das zu dem lokalen Kommunikationsnetzwerk (R1) gehört, wobei das zweite Endgerät (90) geeignet ist, um den Bericht (R) des Überwachungsgeräts (75) über das lokale Netzwerk (R1) zu empfangen.

6. Überwachungssystem (30) nach einem der Ansprüche 1 bis 5, wobei die Betriebsdaten (De) mindestens zwei erste Teilmengen (e1) umfassen, jede erste Teilmenge (e1) umfassend mindestens ein Element, und die Anzeigedaten (Da) umfassend nur eine der ersten Teilmengen (e1).

7. Überwachungssystem (30) nach einem der Ansprüche 1 bis 6, wobei der Rechner (105) geeignet ist, um die Betriebsdaten (De) in eine Vielzahl von zweiten Teilmengen (e2) zusammenzufassen und die Anzeigedaten (Da) anhand der zweiten Teilmengen (e2) zu erzeugen.

8. Überwachungssystem (30) nach einem der Ansprüche 1 bis 7, wobei das globale Netzwerk (R2) mindestens eine Speichervorrichtung (95) umfasst, die geeignet ist, um externe Daten (Dex) zu speichern und um die externen Daten (Dex) an das Überwachungsgerät (75) zu übertragen, wobei das Überwachungsgerät (75) geeignet ist, um die Betriebsdaten (De) anhand mindestens der externen Daten (Dex) und der gemessenen Werten (V) zu erstellen.

9. Überwachungssystem (30) nach einem der Ansprüche 1 bis 8, wobei die Betriebsdaten (De) einen Wert der ersten Spannung (U1) umfassen.

10. Netzwerk (10) zur Stromverteilung, umfassend:
- mindestens einen elektrischen Eingangsleiter (35),
- mindestens einen elektrischen Ausgangsleiter (40),
- mindestens eine Transformatorstation (15) des Netzwerks vom Typ MT/BT, die Transformatorstation (15) umfassend einen elektrischen Verbindungsleiter (55), wobei die Transformatorstation (15) geeignet ist, um von dem elektrischen Eingangsleiter (35) einen ersten elektrischen Strom (C1) zu empfangen, der eine erste Spannung (U1) aufweist, und um dem elektrischen Ausgangsleiter (40) über den elektrischen Verbindungsleiter (55) einen zweiten elektrischen Strom (C2) zuzuführen, der eine zweite Spannung (U2) aufweist, und
- mindestens ein Überwachungssystem (30) nach einem der Ansprüche 1 bis 9.

11. Verfahren zur Überwachung eines Stromverteilungsnetzwerks (10), umfassend:
- mindestens einen elektrischen Eingangsleiter (35),
- mindestens einen elektrischen Ausgangsleiter (40),
- mindestens eine Transformatorstation (15) des Netzwerks vom Typ MT/BT, die Transformatorstation (15) umfassend einen elektrischen Verbindungsleiter (55), wobei die Transformatorstation (15) geeignet ist, um von dem elektrischen Eingangsleiter (35) einen ersten elektrischen Strom (C1) zu empfangen, der eine erste Spannung (U1) aufweist, und um dem elektrischen Ausgangsleiter (40) über den elektrischen Verbindungsleiter (55) einen zweiten elektrischen Strom (C2) zuzuführen, der eine zweite Spannung (U2) aufweist, und
- ein System (30) zur Überwachung des Verteilungsnetzwerks (10), das System (30) umfassend:
• mindestens einen Sensor (70), der geeignet ist, um einen Wert (V) zu messen, der repräsentativ für einen elektrischen Strom (C1, C2, C3) ist, der in dem Eingangsleiter (35), dem Ausgangsleiter (40) oder dem Verbindungsleiter (55) fließt,
• mindestens ein Überwachungsgerät (75) der Transformatorstation (15), das Überwachungsgerät (75) umfassend einen Rechner (105),
• ein erstes Anzeigeendgerät (85), und
• eine Zentralisierungsvorrichtung (80);
wobei der Sensor (70) und das Überwachungsgerät (75) zu einem jeweiligen lokalen Kommunikationsnetzwerk (R1) gehören, das Überwachungsgerät (75), die Zentralisierungsvorrichtung (80) und das erste Endgerät (85) zu einem globalen Kommunikationsnetzwerk (R2) gehören, das Verfahren umfassend die folgenden Schritte:
a) Empfangen von mindestens einem gemessenen Wert (V) durch das Überwachungsgerät (75),
b) Berechnen von Betriebsdaten (De) durch den Rechner (105),
c) Erstellen eines Berichts (R) durch den Rechner (105), anhand mindestens der Betriebsdaten (De), umfassend Anzeigedaten (Da), die geeignet sind, um von dem ersten Endgerät (85) angezeigt zu werden,
d) Übertragen des Berichts (R) durch das Überwachungsgerät (75) über das globale Netzwerk (R2) an die Zentralisierungsvorrichtung (80),
e) Übertragen des Berichts (R) durch die Zentralisierungsvorrichtung (80) an das erste Endgerät (85) über das globale Netzwerk (R2), und
f) Anzeigen, durch das erste Endgerät (85), des Berichts (R).

## Claims

1. - A system (30) for monitoring an electricity distribution network (10), the distribution network (10) comprising:
- at least one electrical input conductor (35),
- at least one electrical output conductor (40), and
- at least one MV/LV transformer station (15) of the network, the transformer station (15) comprising an electrical connection conductor (55), the transformer station (15) being suitable for receiving from the input electrical conductor (35) a first electrical current (C1) having a first voltage (U1), and for delivering, through the electrical connection conductor (55), to the output electrical conductor (40) a second electrical current (C2) having a second voltage (U2),
the system (30) comprising:
• at least one sensor (70) capable of measuring at least one value (V) representative of an electric current (C1, C2, C3) flowing in the input conductor (35), the output conductor (40) or the connection conductor (55),
• at least one device (75) for monitoring the transformer station (15), the monitoring device (75) comprising a computer (105) suitable for generating operating data (De) from the value or values (V) measured by the sensor or sensors (70),
• a first display terminal (85), and
• a centralisation device (80),
the sensor (70) and the monitoring device (75) belonging to a respective local communication network (R1), the monitoring device (75), the centralisation device (80) and the first terminal (85) belonging to a global communication network (R2), and the monitoring device (75) being suitable for generating, from at least the operating data (De) a report (R) comprising display data (Da) suitable for being displayed by the first terminal (85), the monitoring device (75) being furthermore suitable for transmitting the report (R) to the centralisation device (80) via the global network (R2), the centralisation device (80) being suitable for transmitting the report (R) to the first terminal (85) via the global network (R2).

2. - The monitoring system (30) according to claim 1, wherein the global network (R2) is a mobile telephony network.

3. - The monitoring system (30) according to claim 1 or 2, suitable for monitoring a network (10) further comprising an enclosure (20) delimiting a volume inside the enclosure (Vi) and suitable for isolating the transformer station (15) from the outside of the enclosure (20),
wherein the monitoring device (75) is contained within the interior volume of the enclosure (Vi).

4. - The monitoring system (30) according to any one of claims 1 to 3, suitable for monitoring a network (10), wherein the transformer station (30) further comprises an electrical cabinet (47) delimiting a volume inside the cabinet (Va), an electrical panel (50) being comprised in the interior volume of the cabinet (Va),
the monitoring device (75) being comprised in the interior volume of the cabinet (Va).

5. - The monitoring system (30) according to any one of claims 1 to 4, comprising a second terminal (90) belonging to the local communication network (R1), the second terminal (90) being adapted to receive the report (R) from the monitoring device (75) through the local network (R1).

6. - The monitoring system (30) according to any one of claims 1 to 5, wherein the operating data (De) comprises at least two first subsets (e1), each first subset (e1) comprising at least one element, and the display data (Da) comprises only one of the first subsets (e1).

7. - The monitoring system (30) according to any one of claims 1 to 6, wherein the computer (105) is adapted to group the operating data (De) into a plurality of second subsets (e2) and to generate the display data (Da) from the second subsets (e2).

8. - The monitoring system (30) according to any one of claims 1 to 7, wherein the overall network (R2) comprises at least one storage device (95) which is suitable for storing external data (Dex) and for transmitting the external data (Dex) to the monitoring device (75), wherein the monitoring device (75) is suitable for generating the operating data (De) from at least the external data (Dex) and the measured values (V).

9. - The monitoring system (30) according to any of claims 1 to 8, wherein the operating data (De) comprises a value of the first voltage (U1).

10. - An electricity distribution network (10) comprising:
- at least one electrical input conductor (35),
- at least one electrical output conductor (40),
- at least one MV/LV transformer station (15) of the network, the transformer station (15) comprising an electrical connection conductor (55), the transformer station (15) being suitable for receiving from the input electrical conductor (35) a first electrical current (C1) having a first voltage (U1), and for delivering, through the electrical connection conductor (55), to the output electrical conductor (40) a second electrical current (C2) having a second voltage (U2), and
- at least one monitoring system (30) according to any of claims 1 to 9.

11. - The method of monitoring an electricity distribution network (10) comprising:
- at least one electrical input conductor (35),
- at least one electrical output conductor (40),
- at least one MV/LV transformer station (15) of the network, the transformer station (15) comprising an electrical connection conductor (55), the transformer station (15) being suitable for receiving from the input electrical conductor (35) a first electrical current (C1) having a first voltage (U1), and for delivering, through the electrical connection conductor (55), to the output electrical conductor (40) a second electrical current (C2) having a second voltage (U2), and
- a system (30) for monitoring the distribution network (10), the system (30) comprising:
• at least one sensor (70) capable of measuring a value (V) representative of an electric current (C1, C2, C3) flowing in the input conductor (35), the output conductor (40), or the connection conductor (55),
• at least one monitoring device (75) of the transformer station (15), the monitoring device (75) comprising a computer (105),
• a first display terminal (85), and
• a centralisation device (80),
the sensor (70) and the monitoring device (75) belonging to a respective local communication network (R1), the monitoring device (75), the centralisation device (80) and the first terminal (85) belonging to a global communication network (R2), the method comprising the steps of:
a) receiving at least one measured value (V), by the monitoring device (75),
b) calculating operating data (De), by the computer (105),
c) generating, by the computer (105), from at least the operating data (De), a report (R) comprising display data (Da) suitable for display by the first terminal (85),
d) transmitting the report (R) by the monitoring device (75) to the centralisation device (80) via the global network (R2),
e) transmitting by the centralisation device (80) of the report (R) to the first terminal (85) through the global network (R2), and
f) displaying, by the first terminal (85), of the report (R).
